# EUROPEAN PATENT SPECIFICATION

(11) **EP 3 547 646 B1**
(45) Date of publication and mention of the grant of the patent: **10.11.2021**
(21) Application number: 18199566.3
(22) Date of filing: 10.10.2018
(51) Int. Cl.: H04L 29/08, H04L 29/06, G06F 21/55

(54) **SYSTEM AND METHOD OF DETECTING A MODIFICATION OF A WEB RESOURCE**
SYSTEM UND VERFAHREN ZUM ERKENNEN EINER ÄNDERUNG EINER WEB-RESSOURCE
SYSTÈME ET PROCÉDÉ DE DÉTECTION D'UNE MODIFICATION D'UNE RESSOURCE WEB

(30) Priority: 30.03.2018 RU 2018111479; 12.09.2018 US 201816128703
(43) Date of publication of application: 02.10.2019
(73) Proprietor: AO Kaspersky Lab, Moscow 125212 (RU)
(72) Inventor: SKVORTSOV, Vladimir A., 125212 MOSCOW (RU); KOLOTINSKY, Evgeny B., 125212 MOSCOW (RU)
(74) Representative: Chimini, Francesco

(56) References cited:
- RU-C1- 2 638 710
- KEVIN BORGOLTE ET AL: "Delta", COMPUTER & COMMUNICATIONS SECURITY, ACM, 2 PENN PLAZA, SUITE 701 NEW YORK NY 10121-0701 USA, 4 November 2013 (2013-11-04), pages 109-120, XP058034101, DOI: 10.1145/2508859.2516725 ISBN: 978-1-4503-2477-9

## Description

### FIELD OF TECHNOLOGY

The present disclosure relates to antivirus technologies, and more specifically to systems and methods of detecting modifications of web resources.

### BACKGROUND

Personal computers, notebooks, tablets, smartphones, and the like have gained widespread use within recent decades. This widespread use has become a powerful incentive to the use of such devices in various areas of activity and to solve a varied number of problems (from Internet surfing to bank transfers and managing electronic documentation). In parallel with the growth in the number of computing devices and software running on these devices, the number of malicious programs has grown proportionally.

At present, there are an innumerable amount of malicious programs being spread across various networks and other malicious programs being developed. Some of these malicious programs steal personal and confidential information from the devices of users (such as logins and passwords, banking information, electronic documents). Others turn the devices of users into so-called botnets for attacks such as distributed denial of service (DDOS) attacks, or to sort through passwords by the brute force method on other computers or computer networks. Still others propose paid content to users through intrusive advertising, paid subscriptions, sending of SMS to toll numbers, and so on.

The methods of embedding malicious programs into the computers of users also vary. Some are downloaded and installed on servers or clients (the computers of users) covertly (such as by using vulnerabilities of the software) or openly (for example, using social engineering technologies by the efforts of the users themselves). Others embed themselves into data being transmitted between servers and clients that is intercepted by a third party. An example of said methods can be found in patent application RU2638710C1.

Web resources (bank sites, results of queries to servers, and so forth) are some of the popular objects of attack of malicious programs, the target of the attack being confidential user data (logins and passwords, account numbers, etc.), computing resources (used for attacks on other computers, such as participating in DDOS attacks, unauthorized computations, such as mining crypto currencies, and so on), and so forth. The activity of the described attacks starts with the substitution of data being transmitted between servers and clients (for example, the substitution of the content of a personal bank account by a fake personal account, the embedding of malicious scripts, and so on).

The primary element in the fight against the described forms of attack is the determination of a modification of the data of web resources that is being transmitted, for which various technologies are used, including:
- signature analysis, by which one tries to determine modifications of web resources on the basis of a comparison with predetermined templates of web resources;
- heuristic analysis, by which one tries to determine modifications of web resources on the basis of checking for the fulfillment of previously specified rules of formation of web resources;
- black and white lists, by which one tries to determine insertions of links and addresses into web resources.

The present disclosure describes systems and methods which, in one aspect, may detect unknown modifications of web sites. Often, in known analysis technologies, personal user data may be sent from clients to servers (which may be contained in elements of the web sites). Such a data transfer is potentially vulnerable and might be considered unlawful by the legislation of some countries.

The present disclosure descri bes systems and methods for detecting modification of a web resource.

### SUMMARY

The invention is defined by the subject matter of the independent claims. Advantageous enhancements are subject to the dependent claims.

A method comprises generating, on the basis of data about the structure and content of the web resource, a script for verifying the integrity of the web resource, wherein the script is a descri pti on of the process of calculating characteri sti cs of objects of that web resource, embeddi ng the generated scri pt in the web resource, receiving at least one convol uti on of the web resource after the web resource is executed, wherei n the convol uti on is calculated in accordance wi th the scri pt for verifying the integrity of the web resource that was embedded in the web resource bei ng executed, generating an image of the web resource on the basis of the at least one calculated convol uti on, the image of the web resource bei ng a vector representation of the content of the web resource and making, by a processor, a decision as to the modification of the web resource on the basis of the determined characteristics of modification of the web resource

The characteristics of the modification of the web resource are determined on the basis of the generated image of the web resource, making use of a trained model for verifying the integrity, wherein the model for verifying the integrity is a set of rules for calculating the probability of a modification of the web resource.

The model for verifying the integrity is additionally trained on the basis of an image of the web resource that was generated at least on the basis of: previously analyzed web resources; the web resource being analyzed prior to its being executed.

In yet another example, the characteristics of the object of the web resource comprise one or more of: parameters descri bi ng the object of the web resource among the set of all obj ects of that web resource, rules of formati on of the convol uti on of the obj ect of the web resource, and the convolution of the object of the web resource.

In another example, the convolution of the object of the web resource comprises one of: the convolution of parameters describing the object of the web resource, and the convolution of data contained in the object of the web resource.

In yet another example, execution of the web resource comprises one of: executing the script for verifying the integrity of the web resource embedded in the web resource, analysis of the web resource, i nterpreti ng of the web resource; and visualizing the web resource.

In another example, analysis of the web resource is performed during an online sessi on, during whi ch the web resource is executed.

In another example, the objects of the web resource compri se one or more of: scri pts, forms, HTML data, XHR queries, and DOM events

The script for verifying the integrity of the web resource that was embedded in the web resource selects at least one object from the web resource.

The system is disclosed for detecting a modification of a web resource, compri si ng a hardware processor conf i gured to: generate, on the basis of data about the structure and content of the web resource, a script for verifyi ng the integrity of the web resource, wherein the script for verifyi ng the i ntegri ty of the web resource is a descri pti on of the process of calculating characteristics of objects of that web resource; embed the generated script in the web resource; receive at least one convolution of the web resource after the web resource is executed, wherein the convolution iscalculated in accordance with the script for verifying the integrity of the web resource that was embedded in the web resource being executed; generate an image of the web resource on the basis of the at least one calculated convolution, the image of the web resource being a vector representation of the content of the web resource; and make a decision as to the modification of the web resource on the basis of the determined characteristics of modification of the web resource.

The above simplified summary of example aspects serves to provide a basic understanding of the present disclosure. This summary is not an extensive overview of all contemplated aspects, and is intended to neither identify key or critical elements of all aspects nor delineate the scope of any or all aspects of the present disclosure. Its sole purpose is to present one or more aspects in a simplified form as a prelude to the more detailed description of the disclosure that follows. To the accomplishment of the foregoing, the one or more aspects of the present disclosure include the features described and exemplarily pointed out in the claims.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
**Fig. 1** shows an example of the structural diagram of the system of detecting a modification of a web resource.
**Fig. 2** shows an example of the structural diagram of the method of detecting a modification of a web resource.

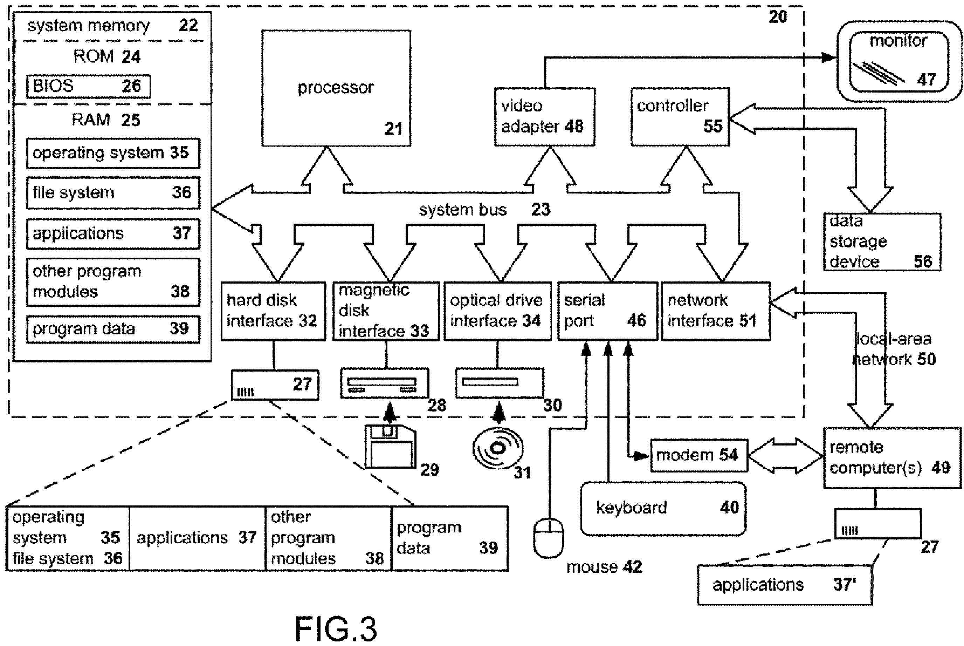

**Fig. 3** shows an example of a general-purpose computer system, a personal computer or a server.

### DETAILED DESCRIPTION

Exemplary aspects are described herein in the context of a system, method and computer program product for detecting modification of web resources. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

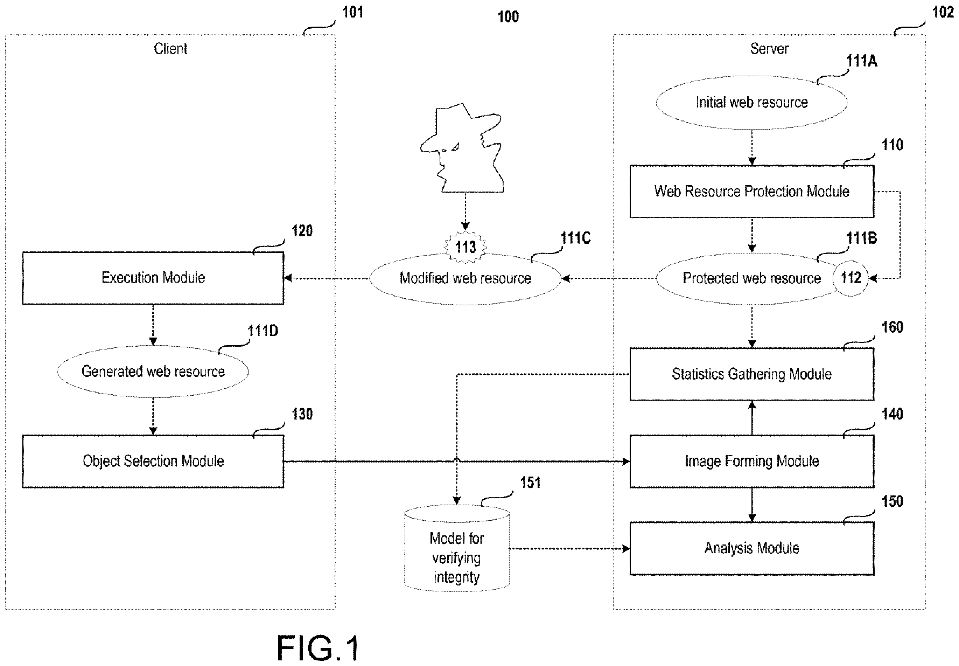

**Fig. 1** is a block diagram of an example of a system **100** for detecting a modification of a web resource.

The system **100** may comprise a client **101,** a server **102,** a web resource **111** (which may represent one or more web objects, comprising at least an initial web resource **111A,** a protected web resource **111B,** a modified web resource **111C,** and a generated web resource **111D**), a script for verifying the integrity of the web resource **112,** the modified data of the web resource **113,** a web resource protection module 110, an execution module 120, an object selection module 130, an image forming module 140, an analysis module 150, a model for verifying the integrity **151,** and a statistics gathering module **160.**

In one example, the system **100** is modeled on a clicnt-scrvcr architecture, wherein execution module **120** and the object selection module 130 function on the client **101** side while the web resource protection module 110, the image forming module 140, the analysis module 150 and the statistics gathering module **160** function on the server side **102.**

For example, the client **101** might be a computer or a mobile device of a user running a browser. The user may be viewing a page of the personal user account using the browser, where the code of the page has been downloaded from a bank server **102.**

In yet another example, the web resource **111** is an Internet site containing at least one page, the page containing at least:
- HTML code containing objects of the web resource;
- multimedia resources stored on the server **102** (for example, links to images, audio and video files, or images, audio and video files written directly on the page in the form url('data:image/png;base64,...'));
- files of scripts;
- style sheet files (CSS, Cascading Style Sheets).

For example, the page displaying the personal user account information contains HTML code describing the structure and content of the page, images associated with the personal user account (such as the bank logo), JavaScript scripts verifying and validating form entry, and so forth.

In yet another example, the objects of the web resource **111** are at least:
- contained in the web resource **111** (for example, in the initial web resource **111A**);
- contained during execution of the web resource **111** (for example, the generated web resource **111D**).

For example, the initial web resource **111A** may contain a script responsible for forming the elements of the page (such as a form), and upon execution of the generated web resource **111D** the generated forms may be present in the document object model (DOM) associated with a web page displayed by a web browser loaded in the RAM of the client **101.**

In yet another example, the objects of the web resource **111** comprise at least:
- scripts;
- forms;
- HTML data;
- XHR requests (XMLHttpRequest);
- DOM events.

Scripts may be written in any scripting language, for example, JavaScript, or the like.

In yet another example, working with the web resource **111** occurs as follows:
- the initial web resource **111A,** which is safe and does not contain any malicious modifications, is initially formed on the server **102;**
- then the protected web resource **111B** is formed; a script is generated for verifying the integrity of the web resource **112** and the script is embedded in the initial web resource **111A;**
- the protected web resource **111B** is then sent for execution to the client **101,** whereupon during any one of the following steps:
   ∘ the sending of the protected web resource **111B** from the server **102** to the client **101;**
   ∘ the execution of the protected web resource **111B** on the client **101**;
   there occurs a modification of the web resource by a malicious application, as a result of which some of the data **113** of the protected web resource **111B** is modified, thereby forming the modified web resource **111C**;
- the generated web resource **111D** is then formed, for which the modified web resource **111C** is executed.

The system **100** may determine whether the initial web resource **111A** has been modified on the basis of an analysis of the generated web resource **111D.**

The web resource protection module **110** is designed to:
- generate, on the basis of data about the structure and contents of the web resource **111,** a script for verifying the integrity of the web resource **112,** wherein the script for verifying the integrity of the web resource **112** involves a determination of the characteristics of the objects of that web resource **111;**
- embed the generated script for verifying the integrity of the web resource **112** in that web resource **111.**

In one example, the characteristics of the object of the web resource **111** are at least:
- one or more parameters describing the object of the web resource **111** among the set of all objects of that web resource **111;**
- a rule of formation of the convolution of the object of the web resource **111;**
- a convolution of the object of the web resource **111.**

In yet another example, the convolution of the object of the web resource **111** includes at least:
- the convolution of parameters describing the object of the web resource **111;**
- the convolution of data contained in the object of the web resource **111.**

In yet another example, the script for verifying the integrity of the web resource **112** is an ECMAScript script (for example, a script written in the JavaScript language).

In yet another example, the script for verifying the integrity of the web resource **112** is an extension for a browser which executes the corresponding web resource.

In yet another example, the script for verifying the integrity of the web resource **112** is generated in advance (before the analysis of the web resource **111**), and during the analysis of the web resource **111** the initial parameters are generated for the working of the script for verifying the integrity of the web resource **112,** while the script for verifying the integrity of the web resource **112** itself may be the same for different web resources.

The execution module **120** is designed to execute the web resource **111.**

In one example, the execution of the web resource **111** involves at least:
- the execution of the script for verifying the integrity of the web resource **112** that was embedded in that web resource **111;**
- analysis of the web resource **111:**
- interpreting of the web resource **111;**
- visualization of the web resource **111.**

In yet another example, the execution of the web resource is performed by the browser working on the client **101,** or by any given application using the data of the web resource and able to run the script for verifying the integrity of the web resource **112** that 5 was embedded in that web resource.

The object selection module **130** is designed to:
- determine the convolution of at least one object of the web resource **111,** the convolution (performed as described elsewhere in this disclosure) being determined in order to run the script for verifying the integrity of the web 10 resource **112** that was embedded in that web resource **111;**
- send the calculated convolutions to the image forming module 140.

In one example, the object selection module **130** may select at least one object from the web resource **111,** the selection of the object from the web resource **111** being done during the execution of the script for verifying the integrity of the web resource **112** that was 15 embedded in that web resource **111.**

The convolution of the object of the web resource is at least:
- a fuzzy hash;
- a locality-sensitive hashing (LHS).

For example, the fuzzy hash can be constructed for any given text singled out from 20 the web object, where the text might be:
- a JavaScript script extracted from the "innerHTML" attributes of the tag "script";
- a JavaScript script downloaded by an AJAX request at the network address of the network resource (URL) of the script;
- a JavaScript script obtained by the call "toString()" in a function which is transmitted in setInterval;
- the HTML representation of a DOM element from the "outerHTML" attribute;
- the current download page via an additional AJAX request.

The algorithm for constructing the hash is parametrized by the length of the n-gram and the overlap:
- the text is broken up into n-grams by words of a given length and overlap;
- for each n-gram the CRC32 is constructed;
- the resulting array of whole numbers is processed by a universal hash function.

At the output an array of 32, 64 or 128 numbers is obtained, depending on the set of coefficients.

In one example of the hash function, its formula has the form: $h \left(x\right) = \left(ax+b\right) mod c$

In yet another example, each type of object from the web resource **111** is analyzed by an individual method different from the methods used to analyze other types of objects.

For example, when analyzing web scripts (such as a JavaScript script) a method is used to find malicious scripts, as well as scripts which are not typical of bank pages:
- a script is selected if it contains the attribute "src";
- the selected scripts, where the attribute "src" is the data-url, are interpreted as inline scripts (for this, the data-url is first decoded).

For example:
data:text/javascript;base64,aWYoImh0dHBzOiI9PT13aW5kb3cubG9jYXRpb24uc HJvdG9jb2wpe3ZhciBzY3JpcHQgPSBkb2N1bWVudC5jcmVhdGVFbGVtZW50K CJzY3JpcH
QiKTtzY3JpcHQuc3JjID0gImh0dHBzOi8vcGxhZmYtZ28ucnUvbGluay9sNWllYW w0MS8
iO2RvY3VtZW50LmdldEVsZW1lbnRzQnlUYWdOYW1lKCJoZWFkIilbMF0uYX BwZW5kQ2hp
bGQoc2NyaXB0KTt9
   ∘ several representations of JavaScript are used:
   ∘ the script is broken up into strings by the line break separator [\r\n];
   ∘ the script is broken up into tokens;

For breaking up the script into tokens, token separators known from the prior art are used (such as "\r\n\t").
∘ the script is broken up into symbols;
- from the tokens, the hash signature is constructed with parameters for the construction of the n-grams:
   ∘ length - 11 tokens,
   ∘ overlap - 4 tokens,
- from the strings of the script the hash signature is constructed with parameters for the construction of the n-grams:
   ∘ length - 7 strings,
   ∘ overlap - 3 strings,
- lists of malicious calls of a scripting language are composed:

An example of a list of malicious script calls (specifically, JavaScript calls, though not limited thereto) is given below:

**#1**

| | | | |
|---|---|---|---|
| eval | CreateObject | removeChild | parseInt |
| setTimeout | ActiveXObject | XMLHttpRequest | fromCharCode |
| setInterval | appendChild | XMLHTTP | |

**#2**

| | | | |
|---|---|---|---|
| encodeURIComponent | decodeURIComponent | atob | btoa |

- a list of key words of JavaScript is composed;

For example, such words are the keys:
[ "break", "do", "instanceof", "typeof", "case", "else", "new", "var", "catch", "finally", "return", "function", "this", "with", "default", "if", "throw", "try", "abstract", "export", "interface", "static", "null", "true", "false"];
   - the primary attributes are considered;
   - for each potentially malicious call, the number of times it is encountered in the tokens is counted;
   - the resulting data is built (for example, in JSON)

For example:

```
  {"object_01": [
      [1958351, 5156809, ...],
      [565119, 357121, 150627, 39682, ...],
      [
      [5347, 5189, 16, 160497, 2412, ...],
      [8, 13, ...],
      [2, 0, 4, 7, 13, 0, ...]
      ]
    ],
    "object_02": [
      ["https://target-url",
      [1958351,5156809, 679194, ...],
      [565119, 878958, ...],
      [
      [5347, 30.016270806059474, 1, ...],
      [8, 13, 1, ...],
      [2, 0, 4, 7, 13, 0, ...]
    ]
    ],
  }
```

For example, for the analysis of XHR requests:
- the methods for executing XHR are intercepted: XMLHttpRequest.prototype.open, XMLHttpRequest.prototype.send;
- for each intercepted DOM level 3 call, the time, the type of event, the url, and the stack trace are recorded;
- the resulting data is built (for example, in JSON)

For example:

```
  {
    "xhr": [
      [1498825034, "open", "https://sync.target-url.com/",
      {"stacktrace":"stacktrace"}],
      [1498825034, "send", "https:// sync.target-url.com/",
      {"stacktrace":"stacktrace"}],
  ],
  }
```

The image forming module 140 is designed to:
- generate the image of the web resource on the basis of the obtained convolutions, the image of the web resource being a vector representation of the contents of the web resource **111;**
- send the generated image of the web resource to the analysis module 150.

The analysis module 150 is designed to:
- determine the characteristics of a modification **113** of a web resource **111** on the basis of the obtained image of the web resource with the use of a model for verifying the integrity **151,** the model for verifying the integrity **151** being a set of rules for calculating the probability of a modification of the web resource **111;**
- pronounce a decision as to the modification of the web resource **111** on the basis of the determined characteristics of the modification **113** of the web resource **111.**

In one example, the characteristics of the modification **113** of the web resource **111** are at least:
- the probability that the web resource **111** has been modified, including at least:
   ∘ for previously specified groups of users of the web resource **111;**
   ∘ for a specific user of the web resource **111;**
- the parameters of the modification **113** of the web resource **111:**
   ∘ the method of modification **113** of the web resource **111;**
   ∘ the data used in the modification of the web resource **111.**

In one example, the analysis of the web resource **111** is done during an online session, during which the mentioned web resource **111** is executed.

The statistics gathering module **160** may perform machine training of the model for verifying the integrity **151** on the basis of the image of the web resource generated at least from:
- previously analyzed web resources **111;**
- the web resource **111** being analyzed prior to its being executed.

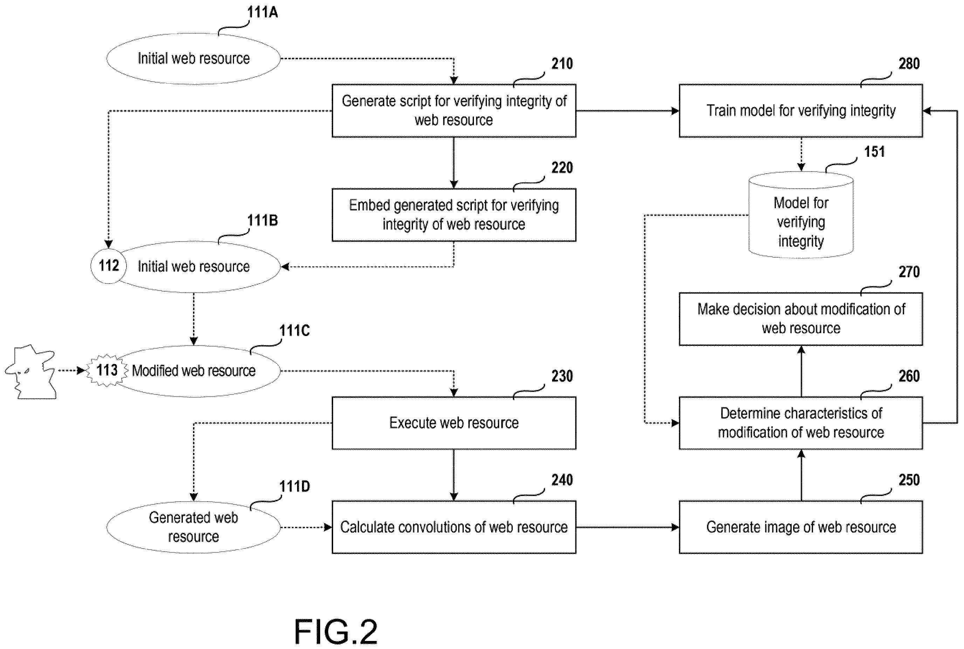

**Fig. 2** shows an example of structural flow diagram of the method for detecting a modification of a web resource.

The method for detecting a modification of a web resource contains a step **210** in which a script for verifying the integrity of the web resource may be generated, a step **220** in which the generated script for verifying the integrity of the web resource may be embedded, a step **230** in which the web resource may be executed, a step **240** in which the convolutions of the web resource may be calculated, a step **250** in which the image of the web resource is generated, a step **260** in which the characteristics of the modification of the web resource may be determined, a step **270** in which a decision may be pronounced as to the modification of the web resource, and a step **280** in which the model for verifying the integrity may be trained.

In step **210,** on the basis of data about the structure and content of the web resource 111, a script for verifying the integrity of the web resource **112,** may be generated wherein the script for verifying the integrity of the web resource **112** is a description of the process of calculating characteristics of the objects of that web resource **111.**

In step **220** the generated script for verifying the integrity of the web resource **112** may be embedded in that web resource **111.**

In step **230** the web resource **111** may be executed. For this purpose, the web resource downloaded at the client side **101** is first analyzed (for example, a syntactical analysis is performed for the page), and based on the results thereof additional data is downloaded (for example, images arc downloaded from the Internet at identified addresses), the scripts contained in the web resource are executed (for example, JavaScript scripts), the page elements are generated (such as forms), the web resource **111** being executed is visualized on the basis of the generated page elements, and furthermore data is additionally gathered in the process of execution of the web resource **111** (for example, events being created during the generating and utilization of the page elements are intercepted).

In step **240** at least one convolution of the web resource **111** may be calculated in accordance with the script for verifying the integrity of the web resource **112** that was embedded in the web resource **111.**

In step **250** the image of the web resource may be generated on the basis of at least one calculated convolution, the image of the web resource being a vector representation of the content of the web resource **111.**

In step **260** the characteristics of the modification **113** of the web resource **111** may be determined on the basis of the generated image of the web resource, making use of a trained model for verifying the integrity **151,** wherein the model for verifying the integrity 151 is a set of rules for calculating the probability of a modification of the web resource **111.**

In step **270** a decision is pronounced as to the modification of the web resource **111** on the basis of the determined characteristics of the modification **113** of the web resource 111.

In step **280** the model for verifying the integrity **151** may be trained on the basis of the image of the web resource generated at least on the basis of:
- previously analyzed web resources **111;**
- the web resource **111** being analyzed prior to its being executed.

**Fig. 4** is a block diagram illustrating a general-purpose computer system **20** on which aspects of the present disclosure may be implemented. It should be noted that the computer system **20** can correspond to the system **100,** and/or individual components thereof.

As shown, the computer system **20** (which may be a personal computer or a server) includes a central processing unit **21,** a system memory **22,** and a system bus **23** connecting the various system components, including the memory associated with the central processing unit **21.** As will be appreciated by those of ordinary skill in the art, the system bus **23** may comprise a bus memory or bus memory controller, a peripheral bus, and a local bus that is able to interact with any other bus architecture. The system memory may include permanent memory (ROM) **24** and random-access memory (RAM) **25.** The basic input/output system (BIOS) **26** may store the basic procedures for transfer of information between elements of the computer system **20,** such as those at the time of loading the operating system with the use of the ROM **24.**

The computer system **20,** may also comprise a hard disk **27** for reading and writing data, a magnetic disk drive **28** for reading and writing on removable magnetic disks 29, and an optical drive **30** for reading and writing removable optical disks **31,** such as CD-ROM, DVD-ROM and other optical media. The hard disk **27,** the magnetic disk drive **28,** and the optical drive **30** are connected to the system bus **23** across the hard disk interface **32,** the magnetic disk interface **33** and the optical drive interface **34,** respectively. The drives and the corresponding computer information media are power-independent modules for storage of computer instructions, data structures, program modules and other data of the computer system **20.**

In one example, a hard disk **27,** a removable magnetic disk **29** and a removable optical disk **31** may be connected to the system bus **23** via the controller **55.** It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36,** in which the operating system **35,** may be stored, as well as additional program applications **37,** other program modules **38,** and program data **39.** A user of the computer system **20** may enter commands and information using keyboard 40, mouse 42, or any other input device known to those of ordinary skill in the art, such as, but not limited to, a microphone, joystick, game controller, scanner, *etc...* Such input devices typically plug into the computer system **20** through a serial port **46,** which in turn is connected to the system bus, but those of ordinary skill in the art will appreciate that input devices may be also be connected in other ways, such as, without limitation, via a parallel port, a game port, or a universal serial bus (USB). A monitor **47** or other type of display device may also be connected to the system bus **23** across an interface, such as a video adapter **48.** In addition to the monitor **47,** the personal computer may be equipped with other peripheral output devices (not shown), such as loudspeakers, a printer, *etc.*

Computer system **20** may operate in a network environment, using a network connection to one or more remote computers **49.** The remote computer (or computers) **49** may be local computer workstations or servers comprising most or all of the aforementioned elements in describing the nature of a computer system **20.** Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and the networks generally have access to the Internet. In LAN or WAN networks, the personal computer **20** is connected to the local-area network **50** across a network adapter or network interface **51.** When networks are used, the computer system **20** may employ a modem **54** or other modules well known to those of ordinary skill in the art that enable communications with a wide-area computer network such as the Internet. The modem **54,** which may be an internal or external device, may be connected to the system bus **23** by a serial port **46.** It will be appreciated by those of ordinary skill in the art that said network connections are non-limiting examples of numerous well-understood ways of establishing a connection by one computer to another using communication modules.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various aspects, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in Figure 4, above). Accordingly, each module may be realized in a variety of suitable configurations, and should not be limited to any particular implementation exemplified herein.

In the interest of clarity, not all of the routine features of the aspects arc disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such. The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without parting from the scope defined by the appended claims.

## Claims

1. A method for detecting a modification of a web resource (111) comprising:
generating (210), by a hardware processor, on the basis of data about the structure and content of the web resource (111), a script for verifying the integrity of the web resource (112), wherein the script is configured to select one or more objects of the web resource and calculate a hash for each selected object of the web resource (111);
embedding (220), by the hardware processor, the generated script in the web resource (111);
receiving (230), by the hardware processor, a plurality of hashes of a plurality of objects of the web resource (111) after the web resource (111) is executed, wherein the hashes are calculated (240) in accordance with the embedded script for verifying the integrity of the web resource (112) and wherein the hash comprises at least one of fuzzy hash or locality-sensitive hash, LSH;
generating (250), by the hardware processor, an image of the web resource (111) based on the plurality of hashed, wherein the image of the web resource (111) being a vector representation of the contents of the web resource (111);
wherein the method is **characterized by** further comprising the following step:
verifying (270), by the hardware processor, whether the web resource (111) is modified using an integrity verification model trained (151) based on: previously analyzed web resources and/or the web resource being analyzed prior to the web resource (111) being executed, wherein verifying includes applying to the generated image of the web resource a set of rules that calculate probability of a modification of the web resource (111).

2. The method according to claim 1, wherein the trained integrity verification model (151) determines whether the web resource (111) is modified based on one or more of: parameters describing the object of the web resource among the set of all objects of that web resource (111), rules of formation of the hash of the object of the web resource (111), and the hash of the object of the web resource (111).

3. The method according to any of claims 1 to 2, wherein the hash of the object of the web resource (111) comprises one of: the hash of parameters describing the object of the web resource (111), and the hash of data contained in the object of the web resource (111).

4. The method according to any of claims 1 to 3, wherein execution of the web resource (111) comprises one of: executing the script for verifying the integrity of the web resource (112) embedded in the web resource (111), analysis of the web resource, interpreting of the web resource; and visualizing the web resource (111).

5. The method according to claim 4, analysis of the web resource (111) is performed during an online session, during which the web resource (111) is executed.

6. The method according to any of claims 1 to 5, wherein the objects of the web resource (111) comprise one or more of: scripts, forms, HTML data, XHR queries, and DOM events.

7. The method according to any of claims 1 to 6, wherein the script for verifying the integrity of the web resource (112) that was embedded in the web resource (111) selects at least one object from the web resource (111).

8. The method according to any of claims 1 to 7, wherein the probability of the modification (113) of the web resource (111) comprise one or more of: the probability that the web resource (111) has been modified, including at least one of: for previously specified groups of users of the web resource (111), and for a specific user of the web resource (111).

9. A system (100) for detecting a modification of a web resource (111) comprising:
a hardware processor configured to:
generate (210), on the basis of data about the structure and contents of the web resource (111), a script for verifying the integrity of the web resource (112), wherein the script is configured to select one or more objects of the web resource and calculate a hash for each selected object of the web resource (112);
embed (220) the generated script in the web resource;
receive (230) a plurality of hashes of a plurality of objects of the web resource (111) after the web resource is executed, wherein the hashes are calculated (240) in accordance with the script for verifying the integrity of the web resource (112) and wherein a hash comprises at least one of fuzzy hash or locality-sensitive hash, LSH;
generate (250) an image of the web resource (111) based on the plurality of hashes, wherein the image of the web resource (111) being a vector representation of the content of the web resource (111);
wherein the system is **characterized in that** the hardware processor is further configured to:
verify (270) whether the web resource is modified using an integrity verification model (151) trained based on: previously analyzed web resources and/or the web resource being analyzed prior to the web resource being executed, wherein verifying includes applying to the generated image of the web resource a set of rules that calculate probability of a modification of the web resource.

10. The system (100) according to claim 9, wherein the trained integrity verification model determines whether the web resource is modified based on one or more of: parameters describing the object of the web resource (111) among the set of all objects of that web resource (111), rules of formation of the hash of the object of the web resource (111), and the hash of the object of the web resource (111).

11. The system (100) according to any of claims 9 to 10, wherein the hash of the object of the web resource (111) comprises one of: the hash of parameters describing the object of the web resource (111), and the hash of data contained in the object of the web resource (111).

## Patentansprüche

1. Verfahren zum Detektieren einer Modifikation einer Webressource (111), umfassend:
Generieren (210), durch einen Hardwareprozessor, auf der Grundlage von Daten über die Struktur und den Inhalt der Webressource (111), eines Skripts zum Verifizieren der Integrität der Webressource (112), wobei das Skript dazu eingerichtet ist, ein oder mehrere Objekte der Webressource auszuwählen und einen Hash für jedes ausgewählte Objekt der Webressource (111) zu berechnen;
Einbetten (220), durch den Hardwareprozessor, des generierten Skripts in die Webressource (111);
Empfangen (230), durch den Hardwareprozessor, einer Mehrzahl von Hashes einer Mehrzahl von Objekten der Webressource (111), nachdem die Webressource (111) ausgeführt worden ist, wobei die Hashes im Einklang mit dem eingebetteten Skript zum Verifizieren der Integrität der Webressource (112) berechnet werden (240) und wobei der Hash wenigstens eines aus einem Fuzzy-Hash oder einem Locality-Sensitive-Hash, LSH, umfasst;
Generieren (250), durch den Hardwareprozessor, eines Bilds der Webressource (111) auf Grundlage der Mehrzahl von Hashes, wobei das Bild der Webressource (111) eine Vektordarstellung der Inhalte der Webressource (111) ist;
wobei das Verfahren **dadurch gekennzeichnet ist, dass** es ferner den folgenden Schritt umfasst:
Verifizieren (270), durch den Hardwareprozessor, ob die Webressource (111) unter Verwendung eines Integritätsverifizierungsmodells (151) modifiziert wird, welches trainiert ist auf Grundlage: zuvor analysierter Webressourcen und/oder darauf, dass die Webressource analysiert worden ist, bevor die Webressource (111) ausgeführt wird, wobei das Verifizieren ein Anwenden an dem generierten Bild der Webressource eines Satzes von Regeln umfasst, welche eine Wahrscheinlichkeit einer Modifikation der Webressource (111) berechnen.

2. Verfahren nach Anspruch 1, wobei das trainierte Integritätsverifizierungsmodell (151) bestimmt, ob die Webressource (111) modifiziert wird, auf Grundlage eines oder mehrerer aus: Parametern, welche das Objekt der Webressource unter dem Satz aller Objekte dieser Webressource (111) beschreiben, Regeln einer Bildung des Hashs des Objekts der Webressource (111) und dem Hash des Objekts der Webressource (111).

3. Verfahren nach einem der Ansprüche 1 bis 2, wobei der Hash des Objekts der Webressource (111) eines umfasst aus: dem Hash von Parametern, welche das Objekt der Webressource (111) beschreiben, und dem Hash von Daten, welche in dem Objekt der Webressource (111) enthalten sind.

4. Verfahren nach einem der Ansprüche 1 bis 3, wobei eine Ausführung der Webressource (111) eines umfasst aus: einem Ausführen des Skripts zum Verifizieren der Integrität der Webressource (112), welches in der Webressource (111) eingebettet ist, einer Analyse der Webressource, einem Interpretieren der Webressource und einem Visualisieren der Webressource (111).

5. Verfahren nach Anspruch 4, wobei die Analyse der Webressource (111) während einer Onlinesitzung durchgeführt wird, während welcher die Webressource (111) ausgeführt wird.

6. Verfahren nach einem der Ansprüche 1 bis 5, wobei die Objekte der Webressource (111) eines oder mehrere umfassen aus: Skripten, Formularen, HTML-Daten, XHR-Abfragen und DOM-Ereignissen.

7. Verfahren nach einem der Ansprüche 1 bis 6, wobei das Skript zum Verifizieren der Integrität der Webressource (112), welches in der Webressource (111) eingebettet wurde, wenigstens ein Objekt aus der Webressource (111) auswählt.

8. Verfahren nach einem der Ansprüche 1 bis 7, wobei die Wahrscheinlichkeit der Modifikation (113) der Webressource (111) eines oder mehrere umfasst aus: der Wahrscheinlichkeit, dass die Webressource (111) modifiziert worden ist, umfassend wenigstens eines aus: für zuvor spezifizierte Gruppen von Benutzern der Webressource (111) und für einen spezifischen Benutzer der Webressource (111).

9. System (100) zum Detektieren einer Modifikation einer Webressource (111), umfassend:
einen Hardwareprozessor, welcher eingerichtet ist zum:
Generieren (210), auf der Grundlage von Daten über die Struktur und die Inhalte der Webressource (111), eines Skripts zum Verifizieren der Integrität der Webressource (112), wobei das Skript dazu eingerichtet ist, ein oder mehrere Objekte der Webressource auszuwählen und einen Hash für jedes ausgewählte Objekt der Webressource (112) zu berechnen;
Einbetten (220) des generierten Skripts in die Webressource;
Empfangen (230) einer Mehrzahl von Hashes einer Mehrzahl von Objekten der Webressource (111), nachdem die Webressource ausgeführt worden ist, wobei die Hashes im Einklang mit dem Skript zum Verifizieren der Integrität der Webressource (112) berechnet werden (240) und wobei ein Hash wenigstens eines aus einem Fuzzy-Hash oder einem Locality-Sensitive-Hash, LSH, umfasst;
Generieren (250) eines Bilds der Webressource (111) auf Grundlage der Mehrzahl von Hashes, wobei das Bild der Webressource (111) eine Vektordarstellung des Inhalts der Webressource (111) ist;
wobei das System **dadurch gekennzeichnet ist, dass** der Hardwareprozessor ferner eingerichtet ist zum:
Verifizieren (270), ob die Webressource unter Verwendung eines Integritätsverifizierungsmodells (151) modifiziert wird, welches trainiert ist auf Grundlage: zuvor analysierter Webressourcen und/oder darauf, dass die Webressource analysiert worden ist, bevor die Webressource ausgeführt wird, wobei das Verifizieren ein Anwenden an dem generierten Bild der Webressource eines Satzes von Regeln umfasst, welche eine Wahrscheinlichkeit einer Modifikation der Webressource berechnen.

10. System (100) nach Anspruch 9, wobei das trainierte Integritätsverifizierungsmodell bestimmt, ob die Webressource modifiziert wird, auf Grundlage eines oder mehrerer aus: Parametern, welche das Objekt der Webressource (111) unter dem Satz aller Objekte dieser Webressource (111) beschreiben, Regeln einer Bildung des Hashs des Objekts der Webressource (111) und dem Hash des Objekts der Webressource (111).

11. System (100) nach einem der Ansprüche 9 bis 10, wobei der Hash des Objekts der Webressource (111) eines umfasst aus: dem Hash von Parametern, welche das Objekt der Webressource (111) beschreiben, und dem Hash von Daten, welche in dem Objekt der Webressource (111) enthalten sind.

## Revendications

1. Procédé de détection d'une modification d'une ressource Web (111) comprenant :
la génération (210), par un processeur matériel, sur la base de données relatives à la structure et au contenu de la ressource Web (111), d'un script pour vérifier l'intégrité de la ressource Web (112), dans lequel le script est configuré pour sélectionner un ou plusieurs objets de la ressource Web et calculer un hachage pour chaque objet sélectionné de la ressource Web (111) ;
l'intégration (220), par le processeur matériel, du script généré dans la ressource Web (111) ;
la réception (230), par le processeur matériel, d'une pluralité de hachages d'une pluralité d'objets de la ressource Web (111) après l'exécution de la ressource Web (111), dans lequel les hachages sont calculés (240) en fonction du script intégré pour vérifier l'intégrité de la ressource Web (112) et dans lequel le hachage comprend au moins l'un parmi un hachage flou et un hachage sensible à l'emplacement, LSH ;
la génération (250), par le processeur matériel, d'une image de la ressource Web (111) sur la base de la pluralité de hachages, dans lequel l'image de la ressource Web (111) est une représentation vectorielle du contenu de la ressource Web (111) ;
dans lequel le procédé est **caractérisé en ce qu'**il comprend en outre l'étape suivante :
la vérification (270), par le processeur matériel, si la ressource Web (111) est modifiée en utilisant un modèle de vérification d'intégrité entraîné (151) sur la base de ce qui suit : des ressources Web préalablement analysées et/ou la ressource Web étant analysée avant l'exécution de la ressource Web (111), dans lequel la vérification inclut l'application, à l'image générée de la ressource Web, d'un ensemble de règles qui calculent une probabilité d'une modification de la ressource Web (111).

2. Procédé selon la revendication 1, dans lequel le modèle de vérification d'intégrité entraîné (151) détermine si la ressource Web (111) est modifiée sur la base d'un ou plusieurs parmi ce qui suit : des paramètres décrivant l'objet de la ressource Web parmi l'ensemble de tous les objets de cette ressource Web (111), des règles de formation du hachage de l'objet de la ressource Web (111), et le hachage de l'objet de la ressource Web (111).

3. Procédé selon la revendication 1 ou 2, dans lequel le hachage de l'objet de la ressource Web (111) comprend l'un parmi ce qui suit : le hachage de paramètres décrivant l'objet de la ressource Web (111) et le hachage de données contenues dans l'objet de la ressource Web (111).

4. Procédé selon l'une quelconque des revendications 1 à 3, dans lequel l'exécution de la ressource Web (111) comprend l'une parmi ce qui suit : l'exécution du script pour vérifier l'intégrité de la ressource Web (112) intégré dans la ressource Web (111), l'analyse de la ressource Web, l'interprétation de la ressource Web, et la visualisation de la ressource Web (111).

5. Procédé selon la revendication 4, dans lequel l'analyse de la ressource Web (111) est effectuée au cours d'une session en ligne pendant laquelle la ressource Web (111) est exécutée.

6. Procédé selon l'une quelconque des revendications 1 à 5, dans lequel les objets de la ressource Web (111) comprennent un ou plusieurs parmi ce qui suit : des scripts, des formulaires, des données HTML, des requêtes XHR, et des événements DOM.

7. Procédé selon l'une quelconque des revendications 1 à 6, dans lequel le script pour vérifier l'intégrité de la ressource Web (112) qui a été intégré dans la ressource Web (111) sélectionne au moins un objet de la ressource Web (111).

8. Procédé selon l'une quelconque des revendications 1 à 7, dans lequel la probabilité de la modification (113) de la ressource Web (111) comprend la probabilité que la ressource Web (111) ait été modifiée pour des groupes préalablement spécifiés d'utilisateurs de la ressource Web (111) et/ou pour un utilisateur spécifique de la ressource Web (111).

9. Système (100) de détection d'une modification d'une ressource Web (111) comprenant :
un processeur matériel configuré pour :
générer (210), sur la base de données relatives à la structure et au contenu de la ressource Web (111), un script pour vérifier l'intégrité de la ressource Web (112), dans lequel le script est configuré pour sélectionner un ou plusieurs objets de la ressource Web et calculer un hachage pour chaque objet sélectionné de la ressource Web (112) ;
intégrer (220) le script généré dans la ressource Web ;
recevoir (230) une pluralité de hachages d'une pluralité d'objets de la ressource Web (111) après l'exécution de la ressource Web, dans lequel les hachages sont calculés (240) en fonction du script intégré pour vérifier l'intégrité de la ressource Web (112) et dans lequel un hachage comprend au moins l'un parmi un hachage flou et un hachage sensible à l'emplacement, LSH ;
générer (250) une image de la ressource Web (111) sur la base de la pluralité de hachages, dans lequel l'image de la ressource Web (111) est une représentation vectorielle du contenu de la ressource Web (111) ;
dans lequel le système est **caractérisé en ce que** le processeur matériel est en outre configuré pour :
vérifier (270) si la ressource Web (111) est modifiée en utilisant un modèle de vérification d'intégrité entraîné (151) sur la base de ce qui suit : des ressources Web préalablement analysées et/ou la ressource Web étant analysée avant l'exécution de la ressource Web, dans lequel la vérification inclut l'application, à l'image générée de la ressource Web, d'un ensemble de règles qui calculent une probabilité d'une modification de la ressource Web.

10. Système (100) selon la revendication 9, dans lequel le modèle de vérification d'intégrité entraîné détermine si la ressource Web est modifiée sur la base d'un ou plusieurs parmi ce qui suit : des paramètres décrivant l'objet de la ressource Web (111) parmi l'ensemble de tous les objets de cette ressource Web (111), des règles de formation du hachage de l'objet de la ressource Web (111), et le hachage de l'objet de la ressource Web (111).

11. Système (100) selon la revendication 9 ou 10, dans lequel le hachage de l'objet de la ressource Web (111) comprend l'un parmi ce qui suit : le hachage de paramètres décrivant l'objet de la ressource Web (111) et le hachage de données contenues dans l'objet de la ressource Web (111).
